# EUROPEAN PATENT SPECIFICATION

(11) **EP 1 595 776 B1**
(45) Date of publication and mention of the grant of the patent: **28.04.2010**
(21) Application number: 05002334.0
(22) Date of filing: 04.02.2005
(51) Int. Cl.: B62J 15/00

(54) **Mud flap particularly for a bicycle mudguard**
Schmutzfänger insbesondere für ein Fahrradschutzblech
Bavette en particulier pour un garde-boue de bicyclette

(30) Priority: 10.05.2004 IT VI20040113
(43) Date of publication of application: 16.11.2005
(73) Proprietor: RPZ S.R.L., 31010 Paderno del Grappa (Treviso) (IT)
(72) Inventor: Passuello, Ivan, 31020 San Zenone Degli Ezzelini Treviso (IT)
(74) Representative: Bettello, Pietro

(56) References cited:
- EP-A- 1 291 273
- DE-U- 1 989 718
- DE-U1- 29 717 082
- GB-A- 794 714
- GB-A- 191 126 995

## Description

The present finding refers to a combination of spray guard profile and of a bicycle mudguard.

Different types of bicycle mudguards are known that, in the most researched versions, have shaped profiles at the end facing the ground that act as spray guards.

Very often, these spray guards are made separately from moulded synthetic material and then assembled with the mudguards so as to constitute a single body.

Some spray guards are joined with the mudguards through rivets, whereas in other cases stay bolts and suitably arranged holes are preferred.

This type of solution, as can easily be understood, involves the need to carry out a series of operations that, whilst seeming simple and run of the mill, can have a great influence from an economic point of view on such a type of product.

One only has to think that on each mudguard it is necessary to make holes, arrange the spray guard and then proceed with the riveting or fastening of the screws.

Moreover, using metal members for fastening the spray guards to the mudguards, with production intended for geographical locations with a particularly wet climate, there are often problems of oxidation, which take away a great deal from the aesthetic value of the mudguards in question.

As examples of the state of the art the following documents can be cited: DE-U-1989718, EP-A-1291273, GB-A-26995 and DE-U-29717082.

The purpose of the finding is that of producing a combination of a spray guard profile and a bicycle mudguard that are more useful and that can be produced in an easier way on respect of the already known devices.

The task outlined above, and others that shall become clearer hereafter, are accomplished by combination of a spray guard profile and of a bicycle mudguard, comprising a main support joined to a spray guard flap, it comprising snap engagement means for removably engaging said main support with a mudguard, said main support being able to be associated with said mudguard, realised according to the characterising portion of claim 1.

Further characteristics and advantages shall become clearer from the description of a preferred, but not exclusive, embodiment of a spray guard profile according to the finding, illustrated for indicating and not limiting purposes in the attached drawings, in which:

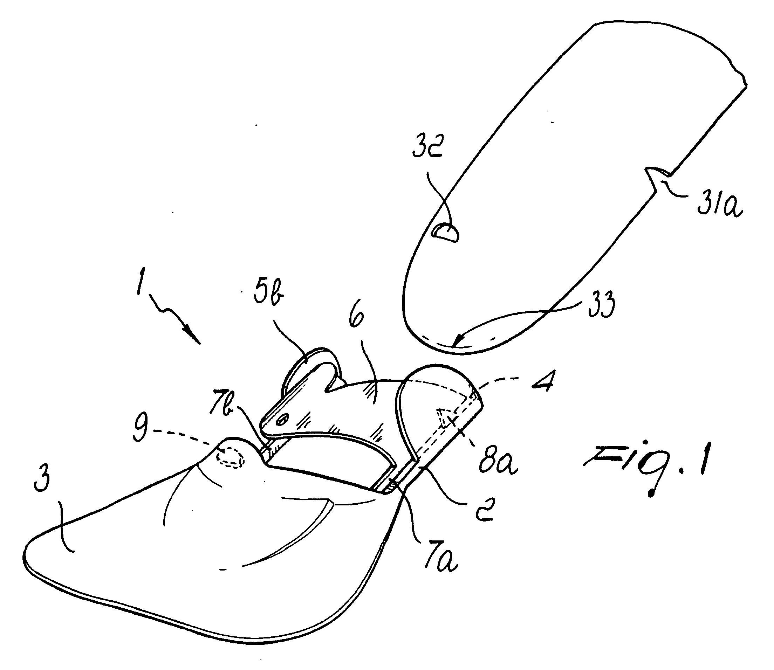

- figure 1 is a perspective view of a spray guard profile according to the finding and of a portion of mudguard;

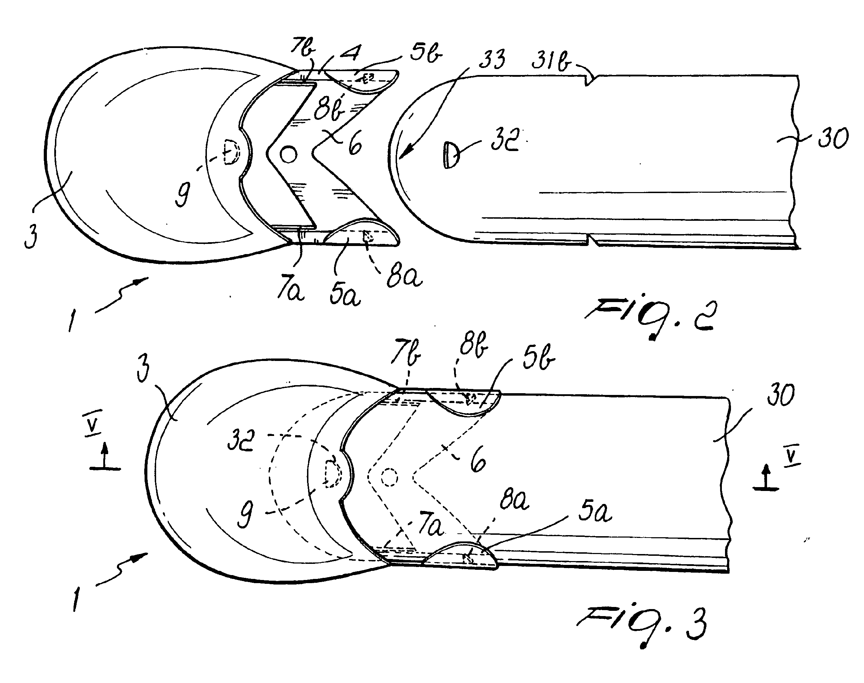

- figure 2 is a plan view of a spray guard profile according to the finding and of a portion of mudguard;
- figure 3 is a plan view of a spray guard profile according to the finding joined to a mudguard;
- figure 4 is a perspective view of a spray guard profile according to the finding joined to a mudguard;
- figure 5 is a section of figure 3 carried out along the axis V-V.

With reference to the quoted figures, the spray guard profile according to the finding, globally indicated with reference numeral 1 and preferably made in a single piece with moulded synthetic material, comprises a main support 2 joined to a spray guard flap 3, advantageously shaped like a goose bill.

In the main support 2, which can be slidably associated with a bicycle mudguard 30, an inner face can be seen at the inner part 20 of the mudguard 30 and an outer face can be seen at the outer part 21 of the mudguard 30, which is the one normally visible to the user.

The main support 2, also by means of a pair of plates 5a and 5b joined to the outer face thereof and to a curved element 6 defined on the inner face of the main support 2, defines a guide 4.

The guide 4, which has a cross section substantially matching the cross section of a mudguard 30 with standard dimensions, allows the spray guard profile 1 to be associated with the mudguard 30 itself.

The curved element 6 also gives the structure thus made a certain degree of deformability, which allows the guide 4 to adapt even to mudguards with slightly different dimensions and proportions to the normal ones by slightly modifying the proportions of its cross section.

In order to give the spray guard profile 1 greater solidity with respect to possible mechanical stresses that it could encounter in the direction of longitudinal extension causing the mudguard 30 to detach, and to give the main support 2 a certain degree of rigidity, there is a pair of shaped ribs 7a and 7b defined by the main support 2 itself on its inner face, so as to constitute a single piece with the curved element 6.

According to the finding, there are snap engagement means on the spray guard profile 1, to removably engage it with the mudguard 30.

These snap engagement means firstly comprise a pair of teeth 8a and 8b defined inside the guide 4 at the plates 5a and 5b, respectively, and made with a shape substantially matching that of two notches 31a and 31b made on the mudguard 30, so as to prevent the spray guard profile 1 coming away from the mudguard 30 once it has been associated with it engaging the pair of teeth 8 with the notches 31.

To assist the action of the pair of teeth 8, the snap engagement means also comprise a projecting part 9 also defined inside the guide 4 but this time is a substantially central position, so as to be able to engage with a slot 32, with a configuration substantially matching that of the projecting part 9, defined on the mudguard 30.

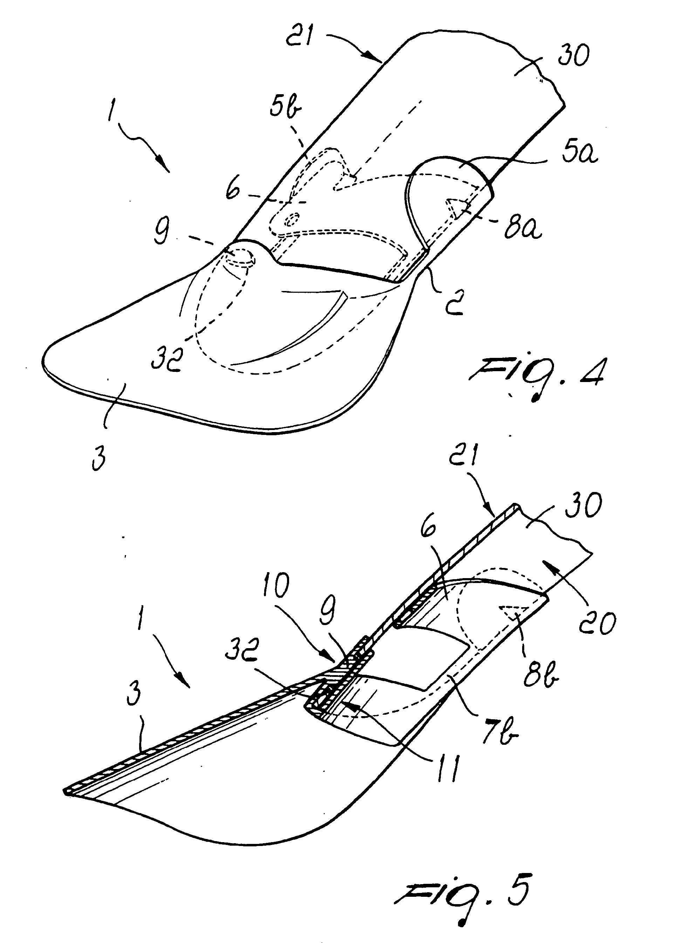

Advantageously, the spray guard flap 3 is joined to the outer face of the main support 2, as shown by the section of figure 5, so that the mudguard 30 can insert into the main support 2, through the guide 4, taking its terminal edge 33 beyond the interlocking point 10 of the spray guard flap 3 in the main support 2, and thus creating an appendix 11.

The interlocking point 10 represents the fulcrum of possible mechanical stresses that the spray guard flap 3 could encounter and therefore the provision of moving it from the position relative to the terminal edge 33 of the mudguard 30, where it is situated in normal spray guards, to the back of the mudguard itself, ensures that the appendix 11 behaves like a binding that cancels out the stress by exploiting the rigidity of the mudguard 30 that partially encases it.

In this way, the mechanical stresses that the spray guard flap 3 encounters can only cause a minimal deformation of the entire structure, moreover rigidified by the shaped ribs 7, and do not manage to lead to the accidental disengagement of the pair of teeth 8 from the notches 31, which otherwise could easily happen.

The innovation described above allows a spray guard to be created with excellent aesthetic impact, since to avoid accidental detachment, it would otherwise be necessary to join the plates 5a and 5b so as to constitute a sort of strap capable of entirely embracing the back part of the mudguard, certainly ensuring a solid fastening of the teeth 8 to the notches 31 but creating an unacceptable aesthetic factor.

The way of use of the spray guard profile according to the finding is very simple and is described hereafter.

Having to install the spray guard profile 1 on a normal mudguard 30, preferably made from metal and on which the notches 31 and the slot 32 have already been made beforehand, it is first of all necessary to insert the mudguard 30 into the guide 4 so as to slidably engage it with it.

The possibility of inserting the mudguard 30 in the guide 4 is also ensured for mudguards with slightly different proportions or cross section to standard ones, thanks to the deformability of the curved element 6 that allows the proportions of the guide 4 to be modified and adapted.

To complete installation, as soon as the resistance offered by the snap engagement means towards the mudguard 30 is encountered during insertion, it is sufficient to slightly increase the force of introduction of the mudguard in the guide 4 until the engagement of the teeth 8 with the notches 31 and of the projecting part 9 with the slot 32 is caused, which occurs with a perceptible snap but above all without the contribution of any metal fastening member.

In practice it has been noted how the spray guard profile according to the finding fully fulfils the predetermined task, since it ensures the possibility of being assembled very quickly to a bicycle mudguard also without requiring the help of metal fastening members.

Given the substantial simplicity in assembly, the spray guard profile according to the finding is also very easy to replace, when necessary, even by any user.

In practice, the materials used, provided that they are compatible with the specific use, as well as the contingent shapes and sizes, can be whatever according to requirements and the state of the art.

## Claims

1. Combination of a spray guard profile (1) and of bicycle mudguard (30), said spray guard profile (1) comprising a main support (2) joined to a spray guard flap (3), and snap engagement means for removably engaging said main support (2) with said mudguard (30), said main support (2) being able to be associated with said mudguard (30), said spray guard profile (1) providing a guide (4) with a cross section substantially matching the cross section of said mudguard (30), said guide (4) being defined by said main support (2) to slidably associate it with said mudguard (30), said snap engagement means comprising at least one pair of teeth (8a, 8b) defined inside said guide (4), said teeth being able to be snap engaged with suitable notches (31 a, 31b) defined on said mudguard (30), the combination being **characterised in that** said notches (31 a, 31b) have a configuration substantially matching said teeth (8a, 8b), said notches being defined symmetrically on the opposite side edges of said mudguard (30).

2. Combination according to the previous claim, **characterised in that** said main support defines an inner face and an outer face that are opposite each other, said inner face being at the inner part of said mudguard and said outer face being at the back part of said mudguard.

3. Combination according to claim 1, **characterised**
**in that** said snap engagement means comprise at least one projecting part (9) defined centrally inside said guide, said projecting part being able to be snap engaged with a suitable slot (32) defined on said mudguard.

4. Combination according to claim 3, **characterised in that** said slot (32) has a configuration substantially matching said projecting part (9), said slot being defined centrally on said mudguard.

5. Combination according to claim 1, **characterised in that** it comprises at least one pair of shaped ribs, (7a,7b) defined by said main support on its inner face, said shaped ribs being suitable for giving said main support rigidity in the longitudinal direction.

6. Combination according to claim 1, **characterised in that** it comprises at least one curved element (6), said curved element partially defining said guide on the inner face of said main support and being suitable for giving said main support deformability in the transversal direction.

7. Combination according to claim 1, **characterised in that** it comprises at least one pair of plates (5a, 5b), said plates partially defining said guide on the outer face of said main support and being defined at said pair of teeth.

8. Combination according to claims 1 and 2, **characterised in that** said spray guard flap (3) is joined to said main support (2) on the outer face of said main support, defining an appendix that acts as a binding to discharge possible mechanical stresses on the back of said mudguard.

## Patentansprüche

1. Kombination eines Spritzschutzprofils (1) und eines Fahrrad-Schmutzfängers (30), wobei das Spritzschutzprofil (1) eine mit einer Spritzschutzklappe (3) verbundene Haupthalterung (2) sowie Rastvernegeiungsmittel zum abnehmbaren Einrasten der Haupthalterung (2) an dem Schmutzfänger (30) aufweist, wobei die Haupthalterung (2) mit dem Schmutzfänger (30) verbunden werden kann, wobei das Spritzschutzprofil (1) eine Führung (4) mit einem Querschnitt bereitstellt, der im Wesentlichen zu dem Querschnitt des Schmutzfängers (30) passt, wobei die Führung (4) derart durch die Haupthalterung (2) definiert wird, dass sie diese verschiebbar mit dem Schmutzfänger (30) verbindet, wobei die Rastvernegelungsmittel wenigstens ein Paar innerhalb der Führung (4) ausgebildeter Zähne (8a, 8b) aufweist, wobei die Zähne mit geeigneten, an dem Schmutzfänger (30) ausgebildeten Kerben (31a, 31b) in Rasteingriff kommen können, wobei die Kombination **dadurch gekennzeichnet ist, dass** die Kerben (31a, 31b) eine Konfiguration aufweisen, die im Wesentlichen zu den Zähnen (8a, 8b) passt, wobei die Kerben symmetrisch an den gegenüber liegenden Rändern des Schmutzfängers (30) ausgebildet sind.

2. Kombination nach dem vorstehenden Anspruch, **dadurch gekennzeichnet, dass** die Haupthalterung eine Innenseite und eine Außenseite definiert, die einander gegenüber liegen, wobei die Innenseite am inneren Teil des Schmutzfängers und die Außenseite rückwärtigen Teil des Schmutzfängers liegt.

3. Kombination nach Anspruch 1, **dadurch gekennzeichnet, dass** die Rastverriegelungsmittel wenigstens ein mittig innerhalb der Führung ausgebildetes vorstehendes Teil (9) aufweist, wobei das vorstehende Teil mit einem geeigneten, an dem Schmutzfänger ausgebildeten Schlitz (32) in Rasteingriff kommen kann.

4. Kombination nach Anspruch 3, **dadurch gekennzeichnet, dass** der Schlitz (32) eine Konfiguration aufweist, die im Wesentlichen zu dem vorstehenden Teil (9) passt, wobei der Schlitz mittig an dem Schmutzfänger ausgebildet ist,

5. Kombination nach Anspruch 1, **dadurch gekennzeichnet, dass** sie wenigstens ein Paar ausgeformter Rippen (7a, 7b) umfasst, die durch die Haupthalterung an deren Innenseite ausgebildet sind, wobei die ausgeformten Rippen geeignet sind, der Haupthalterung eine größere Steifigkeit in Längsrichtung zu verleihen.

6. Kombination nach Anspruch 1, **dadurch gekennzeichnet, dass** sie wenigstens ein gebogenes Element (6) umfasst, welches teilweise die Führung an der Innenseite der Haupthalterung definiert und geeignet ist, der Haupthalterung eine Verfombarkeit in Querrichtung zu verleihen.

7. Kombination nach Anspruch 1, **dadurch gekennzeichnet, dass** sie wenigstens ein Paar Platten (5a, 5b) umfasst, welche teilweise die Führung an der Außenseite der Haupthafterung definieren und an dem Paar Zähne ausgebildet sind.

8. Kombination nach Ansprüchen 1 und 2, **dadurch gekennzeichnet, dass** die Spritzschutzklappe (3) an der Außenseite der Haupthalterung mit der Haupthalterung (2) verbunden ist, wodurch ein Anhang definiert wird, der als Verbindung zur Entlastung möglicher mechanischer Belastungen am Rücken des Spritzschutzes wirkt.

## Revendications

1. Combinaison d'un profil de protection contre les éclaboussures (1) et d'un garde-bone de bicyclette (30), ledit profil de protection contre les éclaboussures (1) comprenant un support principal (2) assemblé à une bavette de protection contre les éclaboussures (3), et des moyens de mise en prise par pression pour mettre en prise de manière amovible ledit support principal (2) avec ledit garde-bone (30), ledit support principal (2) pouvant être associé avec ledit garde-boue (30), ledit profil de protection contre les éclaboussures (1) fournissant un guide (4) avec une section transversale correspondant sensiblement à la section transversale dudit garde-boue (30), ledit guide (4) étant défini par ledit support principal (2) pour l'associer de manière coulissante audit garde-boue (30), lesdits moyens de mise en prise par pression comprenant au moins une paire de dents (8a, 8b) définie à l'intérieur dudit guide (4), lesdites dents pouvant être mises en prise par pression avec des encoches (31a, 31b) appropriées définies sur ledit garde-boue (30), la combinaison étant **caractérisée en ce que** lesdites encoches (31a, 31b) ont une configuration correspondant sensiblement auxdites dents (8a, 8b), lesdites encoches étant définies de manière symétrique sur les bords latéraux opposés dudit garde-boue (30).

2. Combinaison selon la revendication précédente, **caractérisée en ce que** ledit support principal définit une face interne et une face externe qui sont opposées entre elles, ladite face interne étant au niveau de la partie interne dudit garde-boue et ladite face externe étant au niveau de la partie arrière dudit garde-boue.

3. Combinaison selon la revendication 1, **caractérisée en ce que** lesdits moyens de mise en prise par pression comprennent au moins une partie en saillie (9) définie centralement à l'intérieur dudit guide, ladite partie en saillie pouvant être mise en prise par pression avec une fente (32) appropriée définie sur ledit garde-boue.

4. Combinaison selon la revendication 3, **caractérisée en ce que** ladite fente (32) a une configuration correspondant sensiblement à ladite partie en sainte (9), ladite fente étant définie centralement sur ledit garde-boue.

5. Combinaison selon la revendication 1, **caractérisée en ce qu'**eue comprend an moins une paire de nervures façonnées (7a, 7b) définies par ledit support principal sur sa face interne, lesdites nervures façonnées étant appropriées pour donner audit support principal la rigidité dans la direction longidudinale.

6. Combinaison selon la revendication 1, **caractérisée en ce qu'**elle comprend au moins un élément incurvé (6), ledit élément incurvé définissant partiellement ledit guide sur la face interne dudit support principal et étant approprié pour donner audit support principal la dèformabilité dans la direction transversale.

7. Combinaison selon la revendication 1, **caractérisée en ce qu'**elle comprend au moins une paire de plaques (5a, 5b), lesdites plaques définissant partiellement ledit guide sur la face externe dudit support principal et étant définies au niveau de ladite paire de dents.

8. Combinaison selon les revendications 1 et 2, **caractérisée en ce que** ladite bavette de protection contre les éclaboussures (3) est assemblée audit support principal (2) sur la face externe dudit support principal, définissant un appendice qui sert de liaison pour décharger les contraintes mécaniques possibles sur l'arrière dudit garde-boue.
